# EUROPEAN PATENT SPECIFICATION

(11) **EP 0 652 821 B1**
(45) Date of publication and mention of the grant of the patent: **30.09.1998**
(21) Application number: 92900584.1
(22) Date of filing: 18.12.1991
(51) Int. Cl.: B29C 70/10

(54) **PLANAR POROUS COMPOSITE STRUCTURE AND METHOD FOR ITS MANUFACTURE**
FLACHE PORÖSE VERBUNDSTRUKTUR UND VERFAHREN ZU DEREN HERSTELLUNG
STRUCTURE COMPOSITE POREUSE PLANE ET PROCEDE DE FABRICATION

(30) Priority: 18.12.1990 FI 906234
(43) Date of publication of application: 17.05.1995
(73) Proprietor: VALTION TEKNILLINEN TUTKIMUSKESKUS, 02100 Espoo (FI)
(72) Inventor: SUOKAS, Esa, SF-33580 Tampere (FI); KARTTUNEN, Mikko, SF-33560 Tampere (FI)
(74) Representative: Joly, Jean-Jacques
(86) International application number: FI9100393
(87) International publication number: WO9211126

(56) References cited:
- EP-A- 0 033 244
- EP-A- 0 133 893
- EP-A- 0 272 083
- DE-A- 3 408 769
- GB-A- 1 392 373
- US-A- 3 914 494

## Description

The invention relates to a planar porous composite structure according to the precharacterizng part of Claim 1. The invention relates also to methods for manufacturing a structure of this kind.

A composite consists of matrix plastics and reinforcing structure.

The reinforcing structures can be based either on continuous or staple fibres. The continuous fibres such as high-module filaments of glass, aramid or carbon form a uniform, usual uniaxial network.

The excellent mechanical properties of the structural composites are due to the continuous fibres, or filaments, which are usually 50 times stronger and 20 to 150 times more rigid than the matrix materials. Fibres with low density (1.44-2.7 g/cm³) have high tensile strength and elastic modulus (3.0-4.5 GPa and 80-550 GPa, respectively), whereas the corresponding typical values for matrix polymers are 30-130 MPa and 2.0-4.0 GPa, respectively.

The properties of the composite are anisotropic, which is clearest in uniaxial structures. They give maximum tensile strength and modulus. As pieces are usually loaded by a three-dimensional stress field, the one-dimensional plates must be laminated on top of each other in order to achieve reinforcement in several directions. When the continuous fibres are oriented multiaxially in a plane, pseudoisotropic laminates are obtained. In three-dimensional basic coordinates, their stiffness in the xy-plane is comparable to that of aluminum mixtures, but the transverse tensile strength and elastic modulus as well as the shearing strength are low. This is due to the differences in the elastic coefficients between different layers, and therefore the load of the matrix varies in the direction of the thickness of the laminate (z). Thus the breaking of the structural composite is in most cases due to the gliding of layers in relation to each other.

For orientation of the continuous fibres in the structure in a desired way, thermosetting plastic matrices with low viscosity, such as epoxies and polyesters, and expensive manual methods, such as manual lamination and autoclaves, have generally been used in the production of complex composite pieces. The manufacture of thermosetting plastic composites has been slow and difficult, because special equipment is required for the storage and handling of a fluid matrix and the chemical cross-linking of the composites takes a long time. Other difficulties, and in some cases even barriers, for the future development of thermosetting plastic composites are caused by their brittleness and sensitivity to moisture as well as questions of occupational safety.

In the end, it is the interface between the matrix and the fibres that determines how successful the composite is.

The use of thermoplastics as matrices for composites has been delayed by the view that it is impractical to moisten densely packed continuous fibres by viscose polymers. Also, there have been doubts on the succeeding of thermoforming in structures containing more than 60 vol-% inextensible fibres. However, the excellent physical properties of the new technical thermoplastics are gradually changing the said attitude.

The processing of thermoplastic composites is based on heat and pressure, so that they are considerably faster to manufacture than corresponding thermosetting plastic composites. Because thermoforming and/or pressure forming can be repeated several times, broken structures can be easily repaired. In addition, scrap structures and finishing waste can be used, e.g. as material for injection moulding.

Thermoplastic staple fibre composites are manufactured by conventional melt working methods of polymers, e.g. by injection moulding, so that the orientation of the reinforcements cannot be fully controlled. In injection moulding, for example, the orientation of reinforcing staple fibres and polymer molecules is influenced at the filling stage of the mould by a complex flow field with both a shearing and an extending component. When the short staple fibres are fluid-impregnated with a thermoplastic in the screw of the extruder, they are broken down in the strong shearing and extending flow because of a mutual attrition. The viscosity of technical thermoplastics being 10³ to 10⁶ times higher than that of thermosetting plastics, the polymer cannot fully moisten the whole surface area of the fibres. The reinforcements are thus rubbed further at the injection molding state, resulting in an average fibre length of 180 to 200 µm in a finished product.

US Patent No 3,914,494 shows a product, where porosity has been achieved by stacking layers of open weave construction on top of each other. The layers are treated separately thermally, whereafter they are stacked, and the bonding of the layers to each other is achieved by means of a resinous material. During the stacking the elongate openings in the different layers become randomly situated with respect to each other.

European Patent Application No 0 033 244 shows fabrics made of a yarn that contains thermoplastics material. The fabrics are stacked on top of each other, and the layers are bonded to each other in a thermal treatment, where the thermoplastics material melts. It is unlikely that the product obtained possesses porosity at all, because the description on page 4 states that the thermoplastics material associated with the fibres fills the interstices therebetween in a mat, woven or knitted fabric. Even if some pores were accidentally present, their arrangement is not predetermined.

The published European Patent Application No 0 272 083 discloses a method for manufacturing a porous piece for use as a reinforcing material by piling up fabrics formed of yarns comprising matrix and reinforcing fibres and by binding them together with the application of heat. The structure is used for thermosetting plastics applications. Further, from the published European Patent Application No 0 133 893, a method is known for manufacturing shaped pieces reinforced with fibres in a similar way from woven or knitted fabrics piled on top of each other.

In the pieces presented above, however, all the structural possibilities have not been taken into account in the z-direction of the piece.

It is the object of the present invention to develop further the structures and methods represented by US-A-3 914 494 or by European Patent Application Nos 0 133 893 and 0 272 083 and to present a composite structure characterized by simple manufacture and good strength in all directions .

This object is attained according to the invention by a planer porous composite structure as defined in claim 1 and by the methods as defined in claims 12 and 13.

The invention is particularly related to a dimensionally stable planar structure, i.e. a structure whose two dimensions (x and y at right angles to each other) are clearly greater than the third dimension (z) perpendicular to them. It is a linear or curvilinear structure of about a standard thickness in the said z-dimension which is at the same time light because of the pores in it and which, thanks to the said pores, can be used for many purposes to replace corresponding porous structures of prior art where the pores or openings have been arranged by piling up layers of woven or knitted fabric or of braid. The composite structure according to the invention is primarily characterized in that the openings of the structures forming the layers are aligned with each other relative to the plane of the layers as a result of aligning means, thus forming straight passages extending in z-direction of the structure. The reinforcing structure is formed by reinforcing fibres contained in the yarn serving as the structural part of the porous structure, and the matrix is formed by the matrix material contained in the yarn of the same structure, said matrix material also binding the layers formed by the structures lying on top of each other. The porosity of the structure can also be adjusted according to the form and dimensions of the structure, e.g. according to the warp filling of the fabric or the loop type or loop size of a knitted fabric as well as according to the quality of the yarns bounding the said openings.

In the structure, the matrix material forms a phase extending to all directions x, y and z, binding the reinforcing fibres of the porous structure together into a stiff structure.

The passages of the piece extending in the z-direction can be used for introducing material into the piece in different applications or for attaching other structural parts to the piece.

According to the first method for the manufacture of a composite structure the layers piled on top of each other are aligned relative to the direction of their planes with respect to each other so that the openings in their structures are aligned with each other by means of aligning means passing through the openings, and the layers are joined at the melting temperature of the matrix material into a desired shape, whereafter the obtained piece consisting of the piled layers is cooled down. By the combined action of pressure or gravitation and temperature, strong composite structures of desired shape can be made, in which the aligned openings form passages in the z-direction of the structure.

According to the second method for the manufacture of a composite structure, the layers piled on top of each other are containing carbonizable material aligned relative to the direction of their planes with respect to each other so that the openings of their structures are aligned with each other by means of aligning means passing through the openings and the layers are carbonized by using heat in a protective atmosphere in an oven so that the carbonizable material is transformed into amorphic carbon, whereafter the obtained piece consisting of the piled layers is cooled down.

The methods based on the melting of thermoplastics, can be used for the manufacture of light, strong and stiff porous planar pieces with linear, curvilinear or spherical form which replace e.g. honeycomb forms. With a high fluid viscosity, the thermoplastics are advantageously in a fibre form or as coatings of reinforcing filaments in the yarns forming the layers. By bringing matrix and reinforcement units with a small cross-sectional surface close to each other, the flow distance of the thermoplastics is significantly reduced at the processing stage. The reinforcing fibres are thus moistened better and more evenly so that a composite piece can be manufactured by the application of heat and pressure. Using a thermoplastic matrix, the reinforcements can be locked in optional locations and positions as far as the strength calculations are concerned, with regard to the influencing stress field. Particular embodiments of the invention are subject of the dependent claims

Both the matrix and the reinforcement being fibrous, it is possible to use them for making yarns for the structures described above (co- and intermingling). If filaments are used, they can be multiplied, doubled, or double-doubled. A multiplied yarn is composed of two or more filaments, both of a matrix and of a reinforcement unit comingled without a twist. By feeding the matrix and reinforcing fibres on different sides simultaneously e.g. to the needles of a flat-bed or circular knitting machine, a structure is achieved that corresponds to a multiplied yarn. A doubled yarn is made by twining together two or more filaments. Two doubled yarns are further combined to form a double-doubled structure. The co- and intermingling of different fibres can be improved by the air-jet technique, but the flow value must be low to not damage the brittle reinforcements.

Apart from filaments, also staple fibres can be used. Intermingling the matrix and reinforcing units in the staple form during spinning gives a more homogenous yarn than twisting them together as filaments. As the reinforcement and the matrix are evenly distributed in the whole microstructure of the yarn, the axial and radial flow distance is considerably reduced at the heat pressing stage, i.e. the final composite piece is more homogenous. A commercial example of the said fibre type is the trademark "Heltra" (Heltra Division of Courtalds Advanced Materials).

According to one embodiment, the starting materials can, apart from the hybrid yarns consisting of matrix and reinforcing fibres, be flexible melt, powder or solution impregnated reinforcing fibres. The melt impregnated reinforcing fibres are manufactured by a cable covering technique by feeding the reinforcing multifilaments through a crosshead die, wherein the melted polymer forms a coating on their surface. The powder impregnated reinforcement fibres are made by driving the reinforcements through powderized matrix particles which stick to the moving fibres e.g. by static electricity. The path is next directed to a heated oven where the matrix polymer is melted on the surface of the fibre. Powder impregnated fibres can also be coated in a crosshead die by a melted plastics that forms a coating protecting the loose particles when cooled. A commercial example is the FIT fibres (Fibre Impregnated Thermoplastics) by the French company Atochem. In all the cases above, the melted plastics can be replaced by a possible corresponding solution (solution impregnation).

Any of the above-mentioned flexible hybrid yarns formed by a thermoplastic matrix and a reinforcement that can be knitted, woven, braided or processed by another textile manufacturing method into a product with a wide surface area can be used to manufacture a light, strong and stiff composite structure with a regular porosity. By laminating the said formable blanks, preferably knitted fabrics (flat, interlock, rib-knit, Raschel-technique based, etc.), on top of each other, they can further be pressed by heat and a high pressure (> 20 bar), dependent on the bonding and the material, into a porous cellular plate. Instead of overpressure, vacuum or underpressure can be used, or the softened plate can be left to bend by gravitation according to the outlines of the mould. The obtained thermoplastic structure can be easily formed into complex geometrical surfaces. If the matrix polymer is crystalline or semicrystalline, the strength, stiffness and toughness of the cell can be controlled by means of the process parameter, particularly the cooling rate. With a low rate of cooling (< 1°C/min, for example PEEK), the matrix is almost completely crystallized to make the cellular plate stiff and brittle. The toughness, i.e. the shearing strength of the structure is increased by raising the rate of cooling (> 1000°C/min, for example PEEK), because the matrix becomes more amorphic. The choice of the thermoplastics as the matrix can thus be used to regulate the final properties of the products as desired.

Knitted fabric is an advantageous material for the structure according to the invention. At the heat pressing stage, the fabric layers are submitted to so high a normal force (direction z) that the fabric is extended to the extreme in the planar direction (plane xy). As a result, the loops of the fabric are opened to make a net structure.

The cellular structure can be produced in a continuous process by present mass production methods. By driving a flexible "prepreg" semiproduct of several layers, comprising reinforcing fibres and thermoplastic matrix, through a heating zone, it is possible to form it by under- or over-pressure into a shaped product. A production line for a cellular structure with continuous action thus comprises, for example, of feeding the reinforcing and matrix fibres, knitting, a heating and pressure zone, and a finishing stage. A flexible or stiff prepreg cell can also be stored in prefabricated form and transferred e.g. to a wholly another site for the final manufacture of the product.

For matrix materials, all thermoplastics are suitable that can be melted by heat and pressed into a shape by using pressure. The mechanical properties of the final composite piece are best when new technical thermoplasts are used as matrices, such as polyether ether ketone (PEEK), polyphenylene sulphide or thermotropic fluid crystal polymers. Suitable reinforcement fibres include glass, aramid, carbon, ceramic, stone and LCP fibres, which can be staple fibres or mono-or multifilament fibres.

The composite structures are not limited to those formed by melting a thermoplastic matrix only, but also a corresponding stiff ceramic structure can be manufactured by carbonization. In this case, the matrix used may consist of e.g. phenol, viscose or polyacrylnitrile fibres, and the reinforcement used may consist e.g. of ceramic, mineral or stone fibres. The heat pressing is thus replaced by an oven phase in a protective atmosphere, at which the matrix material of the knitted or woven fabric under a normal pressure is carbonized, carbon-carbon binds are formed between matrix materials of adjacent yarns, and the carbonized matrix material finally forms a continuous, uniform matrix of amorphic carbon in the directions x, y and z. If the matrix and the reinforcement are both of the same material to be carbonized, a carbon/carbon composite is produced at the oven phase in which the components retain their original shape. As an example of such a composite, a product made of hybrid yarn can be mentioned, in which viscose fibre serves as the reinforcement and polyacryl nitrile as the matrix.

Using a carbonizable thermoplastics, such as polyacrylnitrile, it melts with the rise of the temperature at the beginning of carbonisation and forms a continuous matrix as early as at this stage. On the other hand, when prepolymerized phenol comprising a cross-linking agent is used, the cross-linking agent is active and binds the matrix in a similar way uniformly in the starting temperature of the carbonization.

As the fabrics any knitted fabric can be used, such as flat, rib-knit or interlock fabric etc. according to the shaping properties and strengthening effect desired. The strengthening effect of a knitted fabric can be improved by a so-called inlay technique. As the deformation degree of the fabric does not depend on the extensibility of the reinforcement fibre but on the macrostructure, a fabric made of hybrid yarn (matrix and reinforcement fibre in the same yarn) represents a flexible semiproduct, i.e. a prepreg material. It is thus possible by means of the type of knitted fabric to regulate the macroscopic deformation degree and simultaneously the strengthening and shaping behaviour of the semiproduct as well as of the final product. The choice of different loop sizes and densities can be used to produce cellular structures with different weights. Because the knit-based cell according to the invention can be easily shaped, it can be used as a semiproduct to make e.g. spherical pieces which are heat-pressed into the final product for example by elastic rubber coatings.

By covering the knitted or woven fabrics with plastic films, a very stiff and strong surface/core/surface structure, i.e. a sandwich structure, is produced in heat pressing. In a loading situation, the oriented surface receives either tensile or compression stress, whereas shearing force is received by the core according to the invention. Thanks to the tough thermoplastic matrix, the said light cell can bear very high shearing stresses, which can be further improved by choosing e.g. a UHMWPE, lyotropic or thermotropic LC fibre as the reinforcement.

The invention is further described in the following by reference to the attached drawings in which
- Fig. 1: shows the production stage of a structure according to the invention before forming the final product,
- Fig. 2: shows a detail of the final structure according to Fig. 1,
- Fig. 3: shows an alternative for the method according to Fig. 1,
- Fig. 4: shows a detail of the final structure according to Fig. 3,
- Fig. 5: shows an alternative for the method as shown in Fig. 3,
- Fig. 6: shows a planar view of the structure according to Fig. 3,
- Figs. 7a and b: show as planar views some alternatives for the structure according to Fig. 6,
- Fig. 8: shows a planar view of an alternative for the structure according to Figs. 1 and 2,
- Fig. 9: shows a yarn type used in the structures forming the layer/layers, and
- Fig. 10: shows another yarn type used in the structures forming the layer/layers.

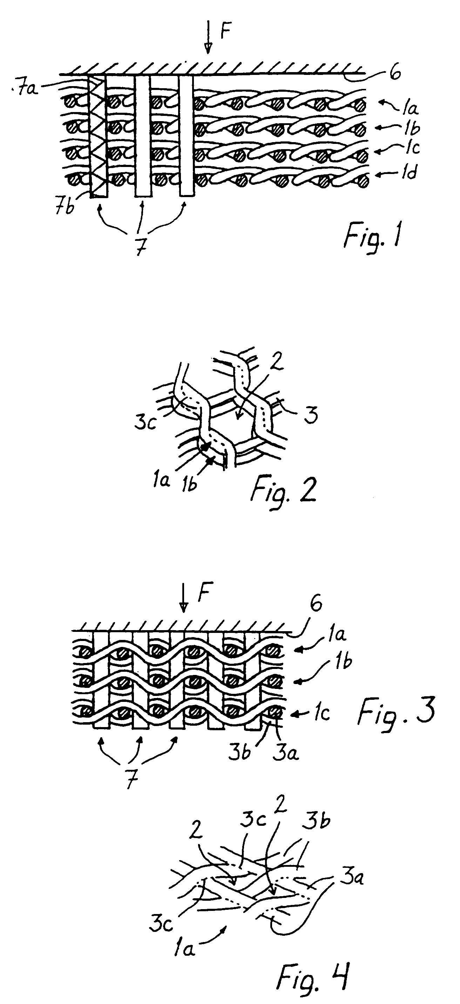

Figure 1 shows the situation before the pressing into a final product as a cross-sectional view perpendicular to the the direction of the plane of the product. The planar structure 1 is formed by layers 1a, 1b, 1c and 1d consisting of simple knitted fabrics piled on top of each other. The openings 2 formed by loops in the fabric layers 1a, 1b, 1c and 1d are placed so as to be aligned with each other when seen in a direction perpendicular to the plane of the product. This is achieved by having pins 7 protruding in the said direction from a press surface 6 of the press organ which penetrate the loops in the layers situated on top of each other. In combination with pressing, the pins 7 can also expand in their lateral direction according to the extension of the knitted fabrics 1, because they comprise each a spring 7a, coated with a flexible wall material 7b, extending in the longitudinal direction inside the pin. The pins 7 can also be formed to have a hollow inside, in which case their wall 7b is flexible. The pins can thus be made to expand in the lateral direction by means of air conducted inside them. The orientation is particularly easy to make in the knitted fabrics in which all the loops have a regular shape and size. The openings on top of each other thus form passages extending through the layers in the z-direction. In case the ends of the pins 7 protrude from the other side of the structure 1, there are openings in the opposite press surface to receive the pins.

In the embodiment according to Fig. 1, the fabrics are piled so that their wales are parallel in the layers situated on top of each other. However, it is also possible to use cross piling so that the wales of the said layers are at right angles to each other. The wales can also be arranged at angles, e.g. at angles of 45° or 60° to each other, in which case the isotropic properties are improved. The yarns forming the layers are formed of any hybrid yarn 3 mentioned above. Thus, the structure of the knitted fabrics must be such that certain regularly situated loops in the layers situated on top of each are will be regularly aligned so that the aligning means can penetrate the passages formed by them in the z-direction.

The structure according to Fig. 1 is submitted to force in the direction of the arrow F, i.e. in the direction perpendicular to the plane of the structure, whereby the structures are brought closer to each other, and by the simultaneous application of heat the matrix material is melted into a continuous matrix phase in the direction perpendicular to plane of the product, binding together the layers 1a, 1b, 1c and 1d lying on top of each other. The knitted fabrics can also be formed by knitting together yarn of only matrix and yarn of only reinforcement. Because of the structure of the knitted fabric, the matrix is also in this case transformed into a continuous phase extending through the whole structure.

Figure 2 shows a detail of the final structure. The loops 2 of the knitted fabric have been extended during pressing into polygonal structures. The point in which the matrix of the hybrid yarn 3 has bound the different adjacent yarn sections surrounding single loops, is denoted by the reference numeral 3c. As shown in the figure, a honeycomb structure comprising hexagonal openings is achieved by the layers on top of each other. The openings formed by loops 2 on top of each other in aligned positions form passages extending through the piece in the z-direction. Thanks to the gaps remaining between the separate knitted fabric layers 1a, 1b, the walls of the passages are porous. This porosity can be adjusted by pressure.

Figure 3 shows a situation similar to that of Fig. 1, in which a woven fabric is used as the layers 1a, 1b, 1c and 1d. The weft and warp yarns 3a, 3b of the woven fabric are advantageously both of hybrid yarn, in which case they can be of the same or of different hybrid yarn. By application of heat and pressure, the structure according to Fig. 2 can also be formed into a final stiff product of permanent shape by the method described above. The openings 2 formed by the weft and warp yarns are aligned with each other by the aligning means 7 similar to those in Fig. 1, and the piece is formed as described above. The aligning means can be laterally non-expandable.

The weft yarns 3a and the warp yarns 3b can also be arranged so that one of them consists solely of matrix material and the other of reinforcing material. Thus it is advantageous to pile the fabric layers on top of each other so that the reinforcing yarns are positioned in different directions in different layers. This is advantageous for achieving isotropicity, also in the case where both the weft and the warp yarns of the fabrics consist of the same or different hybrid yarn.

Figure 4 shows a structure corresponding to Fig. 2 with a woven fabric or a braid. The openings 2 between the weft and warp yarns or between the crossing braided yarns form quadratic or skew openings in the final product. The hybrid yarns 3 serving as the weft and warp yarns or as the braided yarns and forming the yarn sections surrounding the single openings, are merged to each other by the matrix in point 3c.

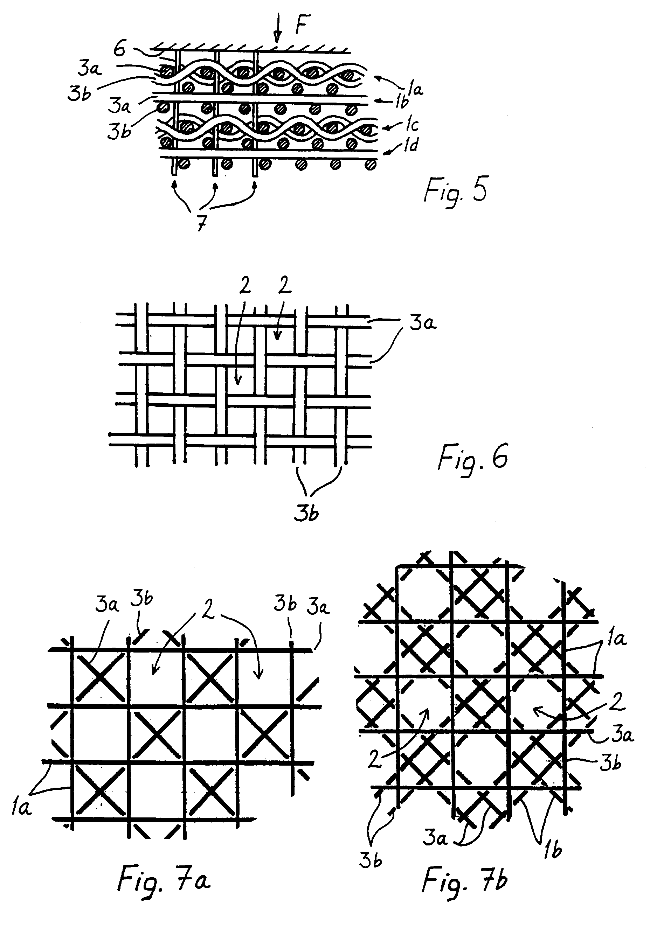

Figure 5 shows a structure in which the fabric layers 1a, 1b, 1c and 1d are piled on top of each other so that the weft and warp yarns 3a, 3b run in crosswise directions in the layers on top of each other. Furthermore, the openings formed by the weft and warp yarns in two adjacent layers are always so positioned that the crossing point of yarns 3a, 3b in one layer 1a is in the middle of the opening of the other layer. Through the smaller openings thus formed, it is possible to push the aligning means 7 through the layers. It is also not necessary to have an aligning means for each opening, but they are to secure that a sufficient number of passages in the z-direction will be present evenly everywhere in the structure.

Figure 6 shows a structure according to Fig. 3 in the z-direction, i.e. in the direction perpendicular to its plane. As shown in the figure, the woven fabric is relatively loose. The size of the openings 2 is therefore dependent on the width of the aligning means, but it should be noted that the aligning means 7 can be as thin as needles. Figures 7a and 7b show structures piled crosswise as seen in the z-direction. In Fig. 7a, two fabric layers 1a and 1b on top of each other have openings of different sizes, wherein the fabric with a larger opening size is at a 45° angle and its weft and warp yarns 3a, 3b run overlapping the crossings of the weft and warp yarns of the other fabric and cover with its crossings every other smaller opening. The aligning means can be inserted through the layers at the openings 2 left free. Figure 7b shows how the weft yarn pairs and the warp yarn pairs of the other layer 1b are used to give octagonal shapes to the openings 2 left free by positioning the layer at a 45° angle.

The alternative of woven fabrics includes also knitted bi- and multiaxial fabrics (so-called LIBA process), which may also include yarns at other than right angles to each other. In such fabrics, the yarns do not run interlocked in a manner of weft and warp yarns but consist of layers knitted on top of each other where the yarns always run in a certain direction.

Furthermore, it is possible to use a braid as an initial structure, in which case the structure may be formed of one or several braided layers analogically to a woven fabric.

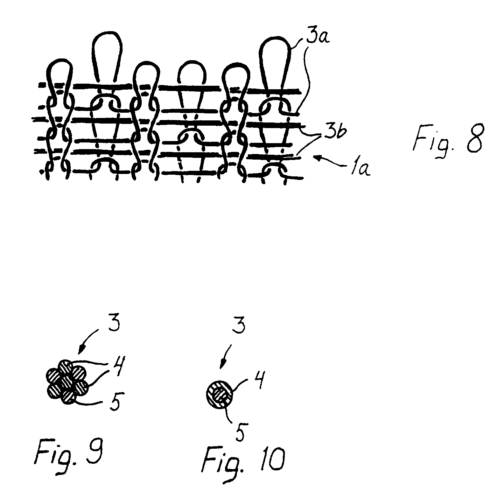

Figure 8 shows an alternative knitted layer 1a that can be used. The figure shows the inlay yarns 3b arranged to run mainly in one direction within the knit, with the function of strengthening the structure and which can be of a different type than the yarns 3a forming the knit. The knitted fabrics can be piled on top of each other so that the aligning means 7 can be inserted through the layers at least at some loops 2 between the inlay yarns 3b. With the same requirements, the weaves can be piled also crosswise, in which case also the inlay yarns run crosswise.

Figure 9 shows a longitudinal cross-sectional view of one type of yarn possible to be used in the structure layers 1 with openings. The yarn is a multiplied yarn consisting of filaments 4 of matrix material and of filaments 5 of reinforcing material. Figure 10, in turn, shows a continuous reinforcing filament 5 as the core of a yarn 3, covered by a continuous layer 4 of matrix material in any manner described above.

For obtaining good strength, the content of the reinforcing fibres in the final product should be more than 10 vol-%, an optimal content being 50 to 60 vol-%.

Several layers can be piled on top of each other also by folding different sections of one and the same blank instead of forming the layers of separate pieces.

### APPLICATIONS

A cellular structure is applicable to secondary and primary parts of transport vehicles, such as automobiles, ships, aircraft and spacecraft, the division depending on the choice of matrix and reinforcing materials. The secondary parts include e.g. different coverings and claddings, whereas the primary parts include, for example, sandwich beams and profiles. The corresponding products can also be used for the needs of construction and process equipment industry. The cell according to the structure can be used to reduce the mass of inertia to a considerable extent, and consequently important application fields include moving machine parts, such as the legs of a robot and the needling plates of textile manufacturing machines. Thanks to its light weight, the cellular plate can also be applied as a support structure for satellite antennas.

Other uses for a knitted fabric honeycomb include different filters for gases, fluid substances and/or particles (air and water protection). When the continuous reinforcing fibre is made of a metal, an electric current can be lead into it so that the positively or negatively charged particles can be made to stick to the cavities of the honeycomb. The porous structure with a large inner surface area can also be used e.g. as a culture medium for bacteria and plants. Due to the large surface area of the cellular structure, moisture from the air is condensed in it with changes in the temperature. This property can be utilized e.g. for obtaining water in desert conditions. The large surface area can also be used for storing solar radiation energy, in which case the reinforcement must be of thin metal conducting electricity. Hence, solar cell elements must be placed in the loop openings, or the matrix, e.g. organic conducting polymers, must be capable of transforming radiation energy into an electric current.

The applications mentioned above are based on planar knits, but if circular knits or tubular braids are used, tubular cellular structures can be manufactured. The matrix of a flexible semiproduct or of cylindrical semiproducts laminated on top of each other must first be melted using a cylindrical heatable metal mould, whereafter it is cooled down at a suitable rate. The obtained tubular cellular plates are suitable e.g. for surfaces of bearings or for different flow filters and flow separators. By choosing either a technical heat-resistant (e.g. polyimide sulphone) or a carbonizable (e.g. polyacryl nitrile) polymer for the matrix and e.g. a ceramic fibre for the reinforcement, it is possible to manufacture quickly e.g. filters and insulators for chimneys. By feeding a blown film or films onto a cylindrical cell structure e.g. by coiling or by extrusion technique, a surface/core, i.e. a sandwich structure can be produced, applicable e.g. to construction material for masts, support bars and chimneys. If the cell matrix and the polymer of the film to be added are of the same material, such as polyphenylene sulfide (PPS), they are welded strongly together at the processing stage, i.e. there is good adhesion at the interface.

The cellular structure with openings can be used as a three-dimensional reinforcing structure by impregnating the openings e.g. by pressure with a thermosetting plastics containing glass fibre. Alternatively, long-fibre reinforced thermoplastic granulate melted by an extruder can be fed using e.g. a special nozzle or hot melt technique, in which case the fluid polymer with its fibres is guided to the loop openings e.g. by means of rolls. The passages extending in the z-direction formed by the openings 2 evenly distributed in the direction x and y are thus useful for the distribution of the polymer in the structure. The obtained three-dimensional laminate is finally cooled under pressure either in cylinders or in a belt press. If the honeycomb and the matrix of the granulate to be added are of the same material, e.g. polypropene, they are strongly welded together at the processing stage, i.e. there is good adhesion at the interface. Thus the product can act as an intermediate product in the manufacture of composite structures, thus forming the reinforcement (the components of the intermediate product can thus be called reinforcement 1 and matrix 1), and the matrix (so-called matrix 2) of the final product, possibly also containing reinforcement (so-called reinforcement 2), can be arranged into the openings of the product. The reinforcement 2 may consist of continuous fibres or microspheres. Thanks to the passages formed by the openings 2, it is possible to have reinforcement not only in the direction x and y but also in the direction z.

### EXAMPLE OF AN EMBODIMENT

Hybrid yarn consisting of polyamid and E glass and with a fineness of about 167 tex was knitted by a flat-bed knitting machine Stoll UFD with an interlock setting, giving a grammage of about 936.0 g/m². Pieces of 300 x 300 mm were cut from the knit and four of them were piled on top of each other so that the orientations of the different layers in the machine direction coincided. The melting point of the matrix polymer used being 256°C, the laminate blank was compression moulded into a porous cellular plate in a temperature of 264...267°C, which was the range set for the machine. At the processing stage, the following profile was followed for time, pressure and temperature:
- 5 min, 100.0 kN, 265°C
- 5 min, 150.0 kN, 265°C
- 8 min, 100.0 kN, 264...267°C
- 2 min, 150.0 kN, 264...267°C

Finally, the piece was air cooled under a weight of 30 kg. The thickness of the laminate was about 6 mm and the density with pores was 500 kg/m³. Samples of the cellular plate were sawn for tensile strength and bending tests with the following measurements:
- tension rods:
   - width: 20.0 ± 0.5 mm
   - length: 200.0 ± 1.0 mm
- bending rods:
   - width: 10.0 ± 0.5 mm
   - length: 100.0 ± 0.5 mm

The tensile test was performed according to the standard ISO 3268: 1978(E) and the three-point bending test according to the norm ASTM D 790 M-84. The results based on five (5) parallel samples are as follows:
- - tensile strength:: 21.3 ± 1.3 MPa
- - break elongation:: 3.2 ± 0.2 %
- - Young's modulus:: 1114.0 ± 75.0 MPa
- - bending strength:: 29.3 ± 1.9 MPa
- - bending elastic modulus:: 1546.0 ± 60.9 MPa

Because of the porosity of the cellular plate according to the invention, the tests performed do not characterize it very well, because the cross-sectional measures according to the dimensions of the rods contain parts of no mass. By dividing the results above by the density of the rods, the following values are obtained:
- - tensile strength:: 42.6 kN/(kg/m)
- - Young's modulus:: 2228 kN/(kg/m)
- - bending strength:: 58.6 kN/(kg/m)
- - bending elastic modulus:: 3092 kN/(kg/m)

## Claims

1. Planar porous composite structure comprising a reinforcing structure and a matrix, wherein it consists of several regular planar structures with openings, placed on top of each other, such as of knitted, woven or braided layers (1a, 1b, 1c...), and formed of continuous yarns (3, 3a, 3b), the pores being formed by the openings (2) of the said structures, such as by loops of the knitted fabric or by the openings between the weft and warp yarns of a woven fabric, the reinforcing structure being formed by the reinforcing fibres (5) comprised in the yarn (3) serving as the structural part of the structure with openings, and the matrix by the matrix material (4) incorporated in the yarn (3) of the same structure before placing the layers on top of each other, the said matrix binding the different yarn sections of the layer that surround single openings and the different layers (1a, 1b, 1c...) together, stiffening simultaneously the structure, **characterized** in that the openings (2) of the structures forming the layers are aligned with each other relative to the plane of the layers (1a, 1b, 1c...) as a result of aligning means (7), thus forming straight passages extending in the z-direction of the structure i.e. perpendicular to the structure.

2. Composite structure according to Claim 1, **characterized** in that the yarn (3) serving as the structural part is a hybrid yarn, which comprises both reinforcing fibre and matrix.

3. Composite structure according to Claim 1 or 2, **characterized** in that the reinforcing fibres are continuous filaments, such as glass.

4. Composite structure according to Claims 2 and 3, **characterized** in that the yarn (3) is composed of a continuous matrix filament (4) and reinforcing filament (5).

5. Composite structure according to Claims 2 and 3, **characterized** in that the yarn (3) is composed of a reinforcing filament (5) and a matrix coating (4) on it.

6. Composite structure according to Claim 1 or 2, **characterized** in that the yarn (3) is composed of reinforcing staple fibres and matrix staple fibers spinned together.

7. Composite structure according to one of the Claims 1-6, **characterized** in that the matrix material (4) is of thermoplastics, the yarn sections being bound together and the structure being stiffened by means of a matrix melted in heat treatment and solidified.

8. Composite structure according to one of the Claims 1-6, **characterized** in that the matrix material is of a material carbonized in heat treatment into amorphic carbon, by means of which the yarn sections are bound together and the structure is stiffened.

9. Composite structure according to Claim 8, **characterized** in that it is a carbon/carbon composite, wherein also the reinforcing fibres are of a material carbonized in heat treatment into amorphic carbon.

10. Composite structure according to one of the Claims 1-9 above, wherein the structure with openings is composed of knitted layers, **characterized** in that the loops of the knit forming the pores (2) are extended from their original shape.

11. Composite structure according to one of the Claims 1-10 above, wherein the structure with openings is composed of knitted layers, **characterized** in that the wales of the knits run crosswise with respect to each other in the layers placed on top of each other.

12. Method for the manufacture of a composite structure according to Claim 7, **characterized** in that the layers piled on top of each other are aligned relative to the direction of their planes with respect to each other so that the openings (2) of their structures are aligned with each other by means of aligning means (7) passing through the openings, and the layers are joined at the melting temperature of the matrix material into a desired shape, whereafter the obtained piece consisting of the piled layers is cooled down.

13. Method for the manufacture of a composite structure according to Claim 8 or 9, **characterized** in that the layers piled on top of each other containing carbonizable material are aligned relative to the direction of their planes with respect to each other so that the openings (2) of their structures are aligned with each other by means of aligning means (7) passing through the openings, and the layers are carbonized by using heat in a protective atmosphere in an oven so that the carbonizable material is transformed into amorphic carbon, whereafter the obtained piece consisting of the piled layers is cooled down.

## Patentansprüche

1. Flaches poröses Verbundgefüge, aufweisend ein Verstärkungsgefüge und eine Matrix, und bestehend aus mehreren, regelmäßigen, flachen Gefügen mit Öffnungen, wie aus gewirkten, gewebten oder geflochtenen Schichten (1a, 1b, 1c...), die übereinander angeordnet und aus fortlaufenden Garnen (3, 3a, 3b) gebildet sind, wobei die Poren durch die Öffnungen (2) der Gefüge gebildet werden, wie durch Schlingen der Wirkware oder durch die Öffnungen zwischen den Schuß- und Kettgarnen eines Gewebes, wobei das Verstärkungsgefüge gebildet wird durch die Verstärkungsfasern (5), die in dem als der strukturelle Teil des Gefüges mit Öffnungen dienenden Garn (3) enthalten sind, und wobei die Matrix gebildet wird durch das Matrixmaterial (4), das in das Garn (3) desselben Gefüges inkorporiert wird, bevor die Schichten übereinander angeordnet werden, wobei die Matrix die verschiedenen Gainbereiche der Schicht, die einzelne Öffnungen umgeben, und die verschiedenen Schichten (1a, 1b, 1c...) unter gleichzeitiger Verstärkung des Gefüges aneinander bindet,
dadurch gekennzeichnet,
daß die Öffnungen (2) der die Schichten bildenden Gefüge als ein Ergebnis von Ausrichtungseinrichtungen (7) relativ zur Ebene der Schichten (1a, 1b, 1c...) miteinander fluchtend sind, so daß sie gerade Durchgänge bilden, die sich in der z-Richtung des Gefüges, d. h. senkrecht zu dem Gefüge, erstrecken.

2. Verbundgefüge nach Anspruch 1,
dadurch gekennzeichnet,
daß das als der strukturelle Teil dienende Garn (3) ein Mischgarn ist, das sowohl Verstärkungsfasern als auch Matrix enthält.

3. Verbundgefüge nach Anspruch 1 oder 2,
dadurch gekennzeichnet,
daß die Verstärkungsfasern fortlaufende Fäden sind, wie Glas.

4. Verbundgefüge nach den Ansprüchen 2 und 3,
dadurch gekennzeichnet,
daß das Garn (3) aus einem fortlaufenden Matrixfaden (4) und Verstärkungsfaden (5) besteht.

5. Verbundgefüge nach den Ansprüchen 2 und 3,
dadurch gekennzeichnet,
daß das Garn (3) aus einem Verstärkungsfaden (5) und einer Matrix-Beschichtung (4) darauf besteht.

6. Verbundgefüge nach Anspruch 1 oder 2,
dadurch gekennzeichnet,
daß das Garn (3) aus miteinander versponnennen Verstärkungs-Stapelfasern und Matrix-Stapelfasern besteht.

7. Verbundgefüge nach einem der Ansprüche 1 bis 6,
dadurch gekennzeichnet,
daß das Matrixmaterial (4) aus Thermoplasten besteht, wobei mittels einer durch Wärmebehandlung geschmolzenen und verfestigten Matrix die Garnbereiche aneinander gebunden sind und das Gefüge versteift ist.

8. Verbundgefüge nach einem der Ansprüche 1 bis 6,
dadurch gekennzeichnet,
daß das Matrixmaterial aus einem Material besteht, das durch Wärmebehandlung zu amorphem Kohlenstoff karbonisiert wird, mittels dessen die Garnbereiche aneinander gebunden werden und das Gefüge versteift wird.

9. Verbundgefüge nach Anspruch 8,
dadurch gekennzeichnet,
daß es ein Kohlenstoff/Kohlenstoff-Verbundmaterial ist, bei dem auch die Verstärkungsfasern aus einem Material bestehen, das durch Wärmebehandlung zu amorphem Kohlenstoff karbonisiert wird.

10. Verbundgefüge nach einem der vorstehenden Ansprüche 1 bis 9, bei dem das Gefüge mit Öffnungen aus gewirkten Schichten besteht,
dadurch gekennzeichnet,
daß die die Poren (2) bildenden Schlingen des Gewirks gegenüber ihrer ursprünglichen Form erweitert sind.

11. Verbundgefüge nach einem der vorstehenden Ansprüche 1 bis 10, bei dem das Gefüge mit Öffnungen aus gewirkten Schichten besteht,
dadurch gekennzeichnet,
daß die Rippen des Gewirks in den übereinander angeordneten Schichten kreuzweise zueinander verlaufen.

12. Verfahren zur Herstellung eines Verbundgefüges gemäß Anspruch 7,
dadurch gekennzeichnet,
daß die übereinander gestapelten Schichten bezüglich der Richtung ihrer Ebenen dergestalt ausgerichtet werden, daß die Öffnungen (2) ihrer Gefüge mittels Ausrichtungseinrichtungen (7), die durch die Öffnungen hindurchgehen, miteinander fluchtend angeordnet werden, und daß die Schichten bei der Schmelztemperatur des Matrixmaterials zu einer gewünschten Form verbunden werden, wonach das aus den gestapelten Schichten bestehende, erhaltene Teil abgekühlt wird.

13. Verfahren zur Herstellung eines Verbundgefüges gemäß Anspruch 8 oder 9,
dadurch gekennzeichnet,
daß die karbonisierbares Material enthaltenden, übereinander gestapelten Schichten bezüglich der Richtung ihrer Ebenen dergestalt ausgerichtet werden, daß die Öffnungen (2) ihrer Gefüge mittels Ausrichtungseinrichtungen (7), die durch die Öffnungen hindurchgehen, miteinander fluchtend angeordnet werden, und daß die Schichten unter Anwendung von Wärme in einer schützenden Umgebung in einem Ofen karbonisiert werden, so daß das karbonisierte Material in amorphen Kohlenstoff umgewandelt wird, wonach das aus den gestapelten Schichten bestehende, erhaltene Teil abgekühlt wird.

## Revendications

1. Structure composite poreuse plane comprenant une structure renforçante et une matrice, où elle consiste en plusieurs structures planes régulières avec des ouvertures, placées les unes au-dessus des autres, telles que des couches tricotées, tissées ou tressées (1a, 1b, 1c...), et formée de fils continus (3, 3a, 3b), les pores étant formés par les ouvertures (2) desdites structures, comme par des boucles du tissu tricoté ou par les ouvertures entre les fils de chaîne et de trame d'un tissu tissé, la structure renforçante étant formée par les fibres renforçantes (5) comprises dans le fil (3) servant de partie structurale de la structure avec des ouvertures, et la matrice par la matière de matrice (4) incorporée dans le fil (3) de la même structure avant de placer les couches au dessus les unes des autres, ladite matrice reliant les différentes sections de fil de la couche qui entourent des ouvertures individuelles et les différentes couches (1a, 1b, 1c...) ensemble, en raidissant simultanément la structure, caractérisée en ce que les ouvertures (2) des structures formant les couches sont alignées entre elles par rapport au plan des couches (1a, 1b, 1c...) par suite de moyens d'alignement (7), en formant ainsi des passages rectilignes s'étendant dans la direction z de la structure, c'est à dire perpendiculairement à la structure.

2. Structure composite selon la revendication 1, caractérisée en ce que le fil (3) servant de partie structurale est un fil hybride, qui comprend à la fois une fibre renforçante et une matrice.

3. Structure composite selon la revendication 1 ou 2, caractérisée en ce que les fibres renforçantes sont des filaments continus, tels que du verre.

4. Structure composite selon les revendications 2 et 3, caractérisée en ce que le fil (3) est composé d'un filament de matrice continu (4) et d'un filament renforçant (5).

5. Structure composite selon les revendications 2 et 3, caractérisée en ce que le fil (3) est composé d'un filament renforçant (5) et d'un revêtement de matrice (4) sur lui.

6. Structure composite selon la revendication 1 ou 2, caractérisée en ce que le fil (3) est composé de fibres discontinues renforçantes et de fibres discontinues de matrice filées ensemble.

7. Structure composite selon l'une des revendications 1 à 6 caractérisée en ce que la matière de matrice (4) est en thermoplastiques, les sections de fil étant liées ensemble et la structure étant raidie au moyen d'une matrice fondue dans un traitement thermique et solidifiée.

8. Structure composite selon l'une des revendications 1 à 6 caractérisée en ce que la matière de matrice est d'une matière carbonisée dans un traitement thermique en carbone amorphe, grâce à quoi les sections de fil sont liées ensemble et la structure est raidie.

9. Structure composite selon la revendication 8, caractérisée en ce qu'il s'agit d'un composite carbone/carbone, où aussi les fibres renforçantes sont d'une matière carbonisée par traitement thermique en carbone amorphe.

10. Structure composite selon l'une des revendications 1 à 9 ci-dessus, où la structure avec des ouvertures est composée de couches tricotées, caractérisée en ce que les boucles du tricot formant les pores (2) sont étirées depuis leur forme originale.

11. Structure composite selon l'une des revendications 1 à 10 ci-dessus, où la structure avec des ouvertures est composée de couches tricotées, caractérisée en ce que les colonnes de mailles des tricots s'étendent transversalement les unes par rapport aux autres dans les couches placées les unes au-dessus des autres.

12. Procédé pour la fabrication d'une structure composite selon la revendication 7, caractérisé en ce que les couches empilées les unes au-dessus des autres sont alignées par rapport à la direction de leurs plans les unes par rapport aux autres si bien que les ouvertures (2) de leurs structures sont alignées entre elles au moyen de moyens d'alignement (7) passant par les ouvertures, et les couches sont jointes à la température de fusion de la matière de matrice en une forme désirée, après quoi la pièce obtenue consistant en les couches empilées est refroidie.

13. Procédé pour la fabrication d'une structure composite selon la revendication 8 ou 9, caractérisée en ce que les couches empilées les unes au-dessus des autres contenant une matière carbonisable sont alignées par rapport à la direction de leurs plans les unes par rapport aux autres si bien que les ouvertures (2) de leurs structures sont alignées entre elles au moyen de moyens d'alignement (7) passant par les ouvertures, et les couches sont carbonisées par la chaleur dans une atmosphère protectrice dans un four si bien que la matière carbonisable est transformée en carbone amorphe, après quoi la pièce obtenue consistant en les couches empilées est refroidie.
